Europäisches Patentamt

European Patent Office

Office européen des brevets

(19)

(11) Numéro de publication: **0 334 691**
**B1**

(12) **FASCICULE DE BREVET EUROPEEN**

(45) Date de publication du fascicule du brevet: **02.01.91**

(51) Int. Cl.⁵: **B 62 D 3/14,** B 62 D 5/14

(21) Numéro de dépôt: **89400436.5**

(22) Date de dépôt: **16.02.89**

(54) **Dispositif de pivotement d'une roue directrice de véhicule automobile.**

(30) Priorité: **23.03.88 FR 8803823**

(43) Date de publication de la demande:
**27.09.89 Bulletin 89/39**

(45) Mention de la délivrance du brevet:
**02.01.91 Bulletin 91/01**

(84) Etats contractants désignés:
**DE GB IT**

(56) Documents cités:
**FR-A-1 251 296**
**GB-A- 834 735**
**US-A-2 451 689**
**US-A-2 755 625**

(73) Titulaire: **AUTOMOBILES PEUGEOT**
**75, avenue de la Grande Armée**
**F-75116 Paris (FR)**

(73) Titulaire: **AUTOMOBILES CITROEN**
**62 Boulevard Victor-Hugo**
**F-92200 Neuilly-sur-Seine (FR)**

(72) Inventeur: **Froumajou, Armand**
**11 Bis, rue Docteur Laennec**
**F-95520 Osny (FR)**

(74) Mandataire: **Moncheny, Michel et al**
**c/o Cabinet Lavoix 2 Place d'Estienne d'Orves**
**F-75441 Paris Cedex 09 (FR)**

Courier Press, Leamington Spa, England.

EP 0 334 691 B1

## Description

L'invention concerne un dispositif de pivotement d'une roue directrice de véhicule automobile telle que définie dans le préambule de la revendication 1.

Les roues directrices des véhicules automobiles, qu'elles soient situées à l'avant ou à l'arrière, comportent des organes mécaniques qui leur sont associés pour permettre leur braquage.

De manière habituelle, la roue est portée par un support de roue monté pivotant autour d'un axe sensiblement vertical et proche du plan médian de la roue, appelé communément pivot. Le pivot de la roue est réalisé de manière matérielle, par des rotules servant d'articulations entre le support de roue et les bras ou triangles de suspension de la roue. Ces bras ou triangles de suspension sont eux-mêmes montés oscillants sur le châssis du véhicule par l'intermédiaire d'axes d'oscillation sensiblement horizontaux. Chacune des roues directrices comporte généralement un bras ou triangle de suspension inférieur et un bras ou triangle de suspension supérieur.

Dans certaines suspensions, par exemple du type MacPherson, le bras supérieur de suspension est remplacé par un systéme à palier associé à l'amortisseur de roue.

La commande de pivotement est réalisée de façon mécanique par l'intermédiaire d'une biellette reliant un levier solidaire du support de roue au mécanisme de direction. Ce mécanisme de direction comprend des moyens permettant de transmettre la rotation du volant à un organe réalisant la connexion des biellettes droites et gauches d'un essieu. Ce mécanisme assure la démultiplication et les transformations de mouvement nécessaires pour produire un pivotement satisfaisant des roues.

Ce mécanisme est habituellement constitué par la colonne de direction généralement en plusieurs parties reliées par des cardans et un systéme de commande de direction à crémaillére ou à boîtier, ces éléments étant complétés éventuellement par des vérins d'assistance.

De tels mécanismes sont complexes et comportent de nombreux éléments constitutifs. De plus, pour assurer la liaison mécanique entre l'organe de direction et le volant, il est nécessaire d'utiliser un arbre en rotation traversant le tablier séparant le compartiment moteur de l'habitacle du véhicule. Il est très difficile de rendre une telle traversée étanche au bruit si bien que les bruits du compartiment moteur sont suceptibles de se propager vers l'habitacle. En outre, en cas de chocs, la colonne de direction transmet des efforts pouvant provoquer la remontée du volant à l'intérieur de l'habitacle.

La liaison mécanique entre les roues impose des contraintes en ce qui concerne le débattement des bielles et l'arc-boutement des leviers et impose également une loi de variation extrêmement rigide, en ce qui concerne les paramètres mis en jeu lors du braquage des roues vers la droite ou la gauche et caractérisant la démultiplication entre le volant et la roue.

Il serait cependant intéressant de pouvoir modifier la loi de braquage des roues en fonction de paramétres extérieurs tels que la vitesse, la dérive des pneus, la rapidité du coup de volant ou tout autre paramètre relatif à la conduite du véhicule, au moment du changement de direction. De même, il serait souhaitable de modifier la démultiplication entre le volant et la roue, notamment en fonction de la vitesse.

Il serait donc souhaitable de piloter l'angle de pivotement de chacune des roues de façon indépendante de façon à faciliter la conduite et à corriger certaines erreurs du conducteur. L'intérêt d'un tel dispositif de pivotement à commande indépendante est encore plus évident lorsque la commande de pivotement est utilisée sur les quatre roues du véhicule. En effet, dans ce cas, la liaison mécanique avec l'essieu arrière augmente encore la complexité du dispositif et l'optimisation du braquage des roues arrières ne peut être réalisée de manière simple.

Le but de l'invention est donc de proposer un dispositif de pivotement d'une roue directrice de véhicule automobile comportant un support de roue monté pivotant autour d'un axe de pivotement sensiblement vertical et proche du plan médian de la roue, grâce à des moyens d'articulation dont l'un au moins est portè par un bras ou triangle oscillant relié au châssis du véhicule par l'intermédiaire d'un axe d'oscillation sensiblement horizontal, ce dispositif étant d'une structure et d'un fonctionnement simple et permettant de prendre en compte de nombreux paramètres de conduite du véhicule, grâce à une commande indépendante et sans transmission mécanique du pivotement de ladite roue.

Dans ce but, le dispositif suivant l'invention comporte:

un actionneur rotatif ayant pour axe de rotation l'axe de pivotement de la roue constituant un moyen d'articulation du support de roue porté par le bras oscillant et comportant un rotor solidaire du support de roue et un stator relié au bras oscillant par l'intermédiaire de moyens d'articulation ayant un axe parallèle à l'axe d'oscillation,

et des moyens de commande de l'actionneur en fonction des paramétres de conduite du véhicule.

Afin de bien faire comprendre l'invention, on va maintenant décrire à titre d'exemples non limitatifs, en se référant aux figures jointes en annexe, plusieurs modes de réalisation d'un dispositif suivant l'invention comportant un actionneur hydraulique.

La figure 1 est une vue en élèvation et en coupe d'une roue directrice et d'un dispositif de pivotement selon l'invention, suivant un plan transversal par rapport au véhicule.

La figure 2 est une vue en perspective de la roue directrice et du dispositif de pivotement représentés sur la figure 1.

La figure 3 est une vue en élèvation et en coupe suivant 3-3 de la figure 4, d'un actionneur rotatif suivant l'invention associé à un support de roue directrice.

La figure 4 est une vue en coupe suivant 4-4 de la figure 3.

La figure 5 est une vue en élévation avec coupe partielle d'un actionneur rotatif d'un dispositif de pivotement suivant l'invention et suivant une variante de réalisation, associé à un support de roue directrice.

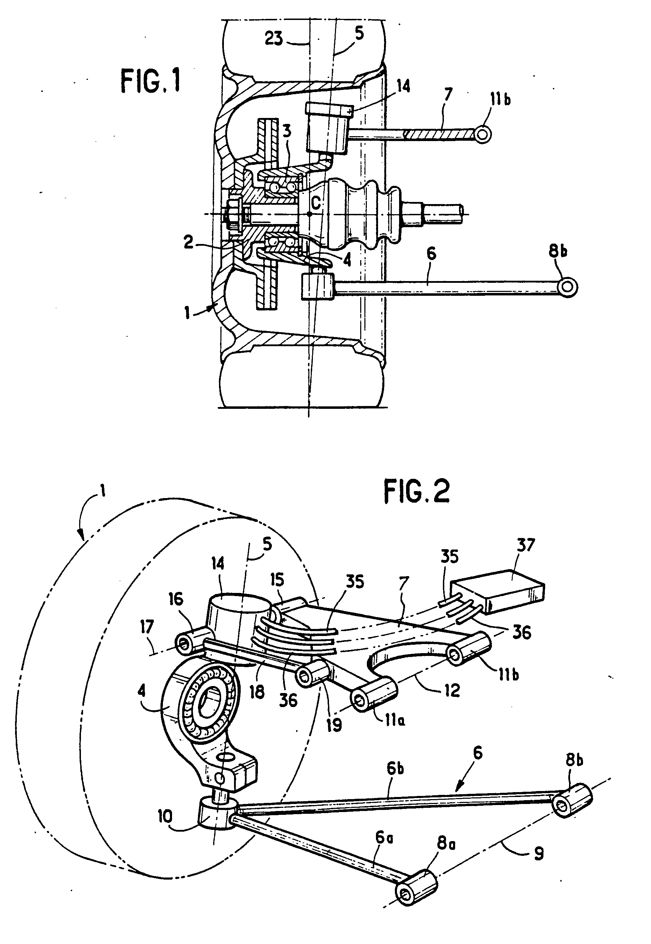

Sur la figure 1, on voit une roue 1 de véhicule automobile comportant un moyeu 2 monté rotatif par l'intermédiaire d'un roulement 3 dans l'ouverture centrale d'un support de roue 4. Le support de roue 4 est relié au châssis du véhicule par l'intermédiaire d'un triangle de suspension inférieur 6 et d'un bras de suspension supérieur 7 dont la structure est visible sur la figure 2.

Le triangle de suspension inférieur 6 comporte deux tiges 6a et 6b solidaires à l'une de leurs extrémités de deux paliers d'articulation 8a et 8b respectivement dont les axes sont alignés et qui permettent la fixation oscillante du triangle 6 sur le châssis du véhicule, autour d'un axe d'oscillation 9 sensiblement horizontal correspondant à l'axe commun des paliers 8a et 8b.

Les extrémités des tiges 6a et 6b opposées aux paliers 8a et 8b sont reliées l'une et l'autre à une rotule 10 sur laquelle est engagée la partie inférieure du support de roue 4. Le support de roue 4 est ainsi relié de manière articulée au triangle de suspension 6 à sa partie inférieure.

Le bras de suspension supérieur 7 comporte deux paliers d'articulation 11a et 11b dont les axes sont alignés et qui sont reliés au châssis du véhicule de façon que le bras 7 soit monté de manière oscillante sur ce châssis, autour d'un axe d'oscillation 12 sensiblement horizontal et confondu avec l'axe des paliers 11a et 11b.

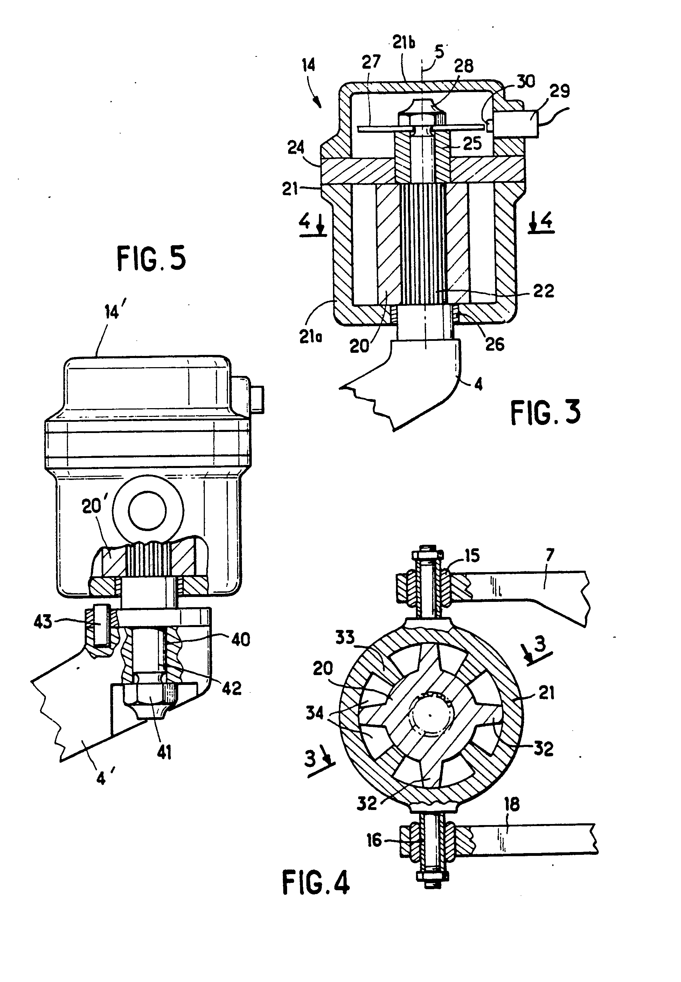

Suivant l'invention, le bras 7 porte à son extrémité opposée aux paliers d'articulation 11a et 11b, un actionneur 14 de type hydraulique relié à la partie supérieure du support de roue 4, qui sera décrit plus en détail en se référant aux figures 3 et 4.

L'actionneur 14 est d'autre part relié à l'extrémité du bras 7, par l'intermédiaire de paliers d'articulation 15 et 16 dont les axes sont alignés suivant une direction 17 horizontale et parallèle à l'axe d'oscillation 12 du bras 7.

Le palier d'articulation 16 est relié à l'extrémité d'une tige de liaison 18 dont l'autre extrémité est reliée de manière articulée au bras 7 par l'intermédiaire d'un palier d'articulation 19 dont l'axe est parallèle aux axes 12 et 17.

En se reportant aux figures 3 et 4, on voit que l'actionneur 14 comporte une partie interne ou rotor 20 fixée à l'extrémité supérieure du support de roue 4 et une partie externe ou stator 21 fixée de manière articulée par l'intermédiaire des paliers d'articulation 15 et 16 à l'extrémité du bras 7 et de la tige 18. pour cela, le corps du stator 21 est solidaire de deux bouts d'axe alignés qui sont engagés dans les paliers d'articulation 15 et 16.

La partie supérieure du support de roue 4 constitue un arbre vertical 22 engagé dans un alésage central du rotor 20. La partie de l'arbre 22 engagée dans l'alésage du rotor 20 et l'alésage de ce rotor comportent des cannelures correspondantes qui sont engagées les unes dans les autres de façon que le rotor 20 et le support de roue 4 soient solidaires en rotation autour de l'axe de l'actionneur rotatif 14.

Comme il est visible sur les figures 1 et 2, l'axe de rotation de l'actionneur 14 est aligné avec la rotule 10 et définit avec celle-ci l'axe de pivotement 5 de la roue 1.

L'actionneur qui constitue le moyen d'articulation du support de roue 4 à l'extrémité du bras 7 grâce aux paliers 15 et 16 comporte un axe de rotation du rotor dans le stator confondu avec l'axe de pivotement de la roue.

Cet axe de pivotement 5, comme il est visible sur la figure 1, a une direction faisant un angle faible avec le plan vertical et une position proche du plan médian 23 de la roue.

Le stator externe 21 de l'actionneur 14 comporte une partie inférieure 21a et une partie supérieure 21b entre lesquelles est fixée une plaque médiane 24 portant un palier 25 au niveau d'un alésage central.

La partie inférieure 21a du stator comporte un alésage de passage de l'arbre 22 du support de roue 4 dans lequel est disposé un palier 26. Les paliers 25 et 26 définissent l'axe de rotation 5 du support de roue 4 solidaire du rotor 20, par rapport au stator 21.

L'extrémité supérieure de l'arbre 22 du support de roue 4 débouche au-dessus du palier 25 et porte un disque 27 fixé sur l'arbre 22 par un écrou 28 et disposé à l'intérieur du stator 21 dans sa partie supérieure au-dessus du rotor 20.

Un capteur d'angle 29 est fixé dans la paroi de la partie supérieure 21b du stator et comporte un élément sensible 30 dirigé vers l'intérieur du stator et disposé en vis-à-vis du disque 27. On peut ainsi mesurer de façon très précise l'angle de déplacement en rotation de l'arbre 22 et du support de roue 4.

Le rotor 20 de l'actionneur est monté dans la partie inférieure du stator, en-dessous de la plaque 24; ce rotor comporte des pales radiales 32 et le stator comporte un même nombre d'ailettes radiales 33 dirigées vers l'intérieur. L'extrémité extérieure des pales 32 vient en contact frottant et étanche sur la surface intérieure du stator 31 et la partie d'extrémité intérieure des ailettes 33 vient en contact frottant et étanche sur la surface extérieure cylindrique du rotor 20.

Le stator et le rotor délimitent ainsi des chambres successives 34.

Les chambres 34 sont séparées en deux groupes, une chambre sur deux dans la direction circonférentielle étant reliée à une conduite hydraulique 35 (représentée sur la figure 2) et les autres chambres à une conduite hydraulique 36.

Les conduites 35 et 36 sont reliées, à leur extrémité opposée à l'actionneur 14, à un boîtier de commande et de distribution disposé dans une partie du véhicule judicieusement choisie.

Le boîtier 37 renferme l'électronique de commande de la direction du véhicule et des servo-valves et distributeurs hydrauliques permettant d'alimenter sélectivement les actionneurs hydrauliques des dispositifs de pivotement des roues du véhicule.

Les informations concernant les paramètres de conduite du véhicule sont transmises au boîtier 37 qui en assure le traitement pour commander les dispositifs de pivotement des roues directrices.

En particulier, le boîtier 37 reçoit les informations provenant des capteurs d'angle des différentes roues directrices et relatives à l'orientation de ces roues autour de leur axe de pivotement.

Le boîtier 37 reçoit ègalement les informations relatives aux déplacements du volant imposés par le conducteur.

Pour réaliser le pivotement de la roue directrice 1 dans un sens, un groupe de chambres 34 de l'actionneur 14 est alimenté par l'une des conduites hydrauliques 35 et 36. Les autres chambres 34 sont alors reliées à une bâche de décharge par la seconde conduite hydraulique.

Pour effectuer le pivotement de la roue dans l'autre sens, les rôles des conduites 35 et 36 sont interverties par une servovalve de commande disposée dans le boîtier 37.

On obtient donc, grâce au dispositif de pivotement suivant l'invention, une action appropriée et parfaitement contrôlée sur chacune des roues directrices. La commande de chacune des roues par l'intermédiaire de l'actionneur est d'autre part totalement indépendante sur le plan mécanique, de l'action sur les autres roues.

Sur la figure 5, on voit une variante de réalisation du montage d'un actionneur 14' à l'extrémité supérieure d'un support 4' d'une roue directrice de véhicule automobile. Le support de roue 4' supporte à sa partie supérieure un alésage de centrage 40 dans lequel est engagée l'extrémité inférieure d'un arbre 42 analogue à l'arbre 22 solidaire du support de roue 4 dans le mode de réalisation représenté aux figures 3 et 4. L'arbre 42 est fixé à l'extrémité supérieure du support de roue 4' par un écrou 41 en prise avec une partie d'extrémité filetée de l'arbre 42 et un ou plusieurs pions de blocage en rotation 43 engagés dans des lumiéres usinées dans une collerette d'appui de l'arbre 42 et dans la partie d'extrémité supérieure du support de roue 4'.

L'arbre 42 comporte dans sa partie supérieure des cannelures qui viennent s'engager dans des cannelures correspondantes de l'alésage central du rotor 20' de l'actionneur 14'.

Le mode de réalisation de la figure 5 permet de faciliter le dèmontage de l'actionneur 14', par exemple pour son remplacement.

Le dispositif de pivotement d'une roue directrice, suivant l'invention, permet donc une commande totalement indépendante du braquage de la roue, sur le plan mécanique. On peut donc prendre en compte de nombreux paramètres pour déterminer le braquage optimal de la roue, en réponse à une action du conducteur sur le volant de direction, en fonction de différents paramétres de conduite du véhicule, par exemple en fonction de la vitesse.

Le dispositif suivant l'invention est dautre part simple et d'une grande sûreté de fonctionnement. Son encombrement est faible et son adaptation sur une roue directrice extrèmement aisée dans la mesure où l'actionneur remplace un élément existant, à savoir l'une des articulations du support de roue sur un bras ou triangle de suspension.

Le mode de réalisation dècrit et représenté sur la figure 2, dans lequel le bras de suspension supérieur 7 comporte une partie en forme de triangle comportant trois articulations 11a, 11b et 15 et une biellette comportant une articulation 16, elle-même articulée sur la partie du bras en forme de triangle, permet d'éviter l'apparition de contraintes, dans le cas où l'on n'a pas un parallélisme parfait entre les axes 9 et 12 des paliers 8a, 8b et 11a, 11b et l'axe commun aux paliers 15, 16 constituant l'axe d'articulation du stator de l'actionneur 14.

L'invention ne se limite pas aux modes de rèalisation qui ont été décrits.

C'est ainsi que le bras supérieur sur lequel est monté l'actionneur peut être réalisé en une seule pièce et sous forme entièrement rigide.

L'actionneur peut être monté indifféremment sur un bras ou triangle de suspension supérieur ou un bras ou triangle de suspension inférieur.

Dans le cas d'une suspension du type MacPherson, dans laquelle le bras supérieur est remplacé par un palier de guidage de l'amortisseur, l'actionneur du dispositif de pivotement suivant l'invention peut être monté sur le bras ou triangle de suspension inférieur de la roue.

Le dispositif de pivotement suivant l'invention peut être monté indifféremment sur une roue non tractrice, comme décrit plus haut, ou sur une roue tractrice, celle-ci étant reliée suivant son axe à un arbre de transmission, par l'intermédiaire d'un joint homocinétique.

Le dispositif suivant l'invention peut être associé, aussi bien aux roues avant qu'aux roues arrières du véhicule.

Il est bien évident qu'on peut utiliser un actionneur d'un type différent d'un actionneur hydraulique, à partir du moment où le montage de cet actionneur sur un bras de suspension de la roue est possible.

Le boîtier de commande électronique de l'actionneur peut recevoir tout type d'informations utiles pour la commande de direction, ces informations étant fournies par des capteurs associés à différents organes du véhicule. Dans tous les cas, ce boîtier devra recevoir des informations concernant l'angle de braquage du volant et l'angle de pivotement de la roue.

Il ne sort pas du cadre de l'invention non plus d'envisager l'utilisation, à la place d'un boîtier électronique central, d'un ensemble de boîtiers associés chacun à l'une des roues directrices et reliés entre eux par un organe de régulation et de synchronisation.

**Revendications**

1. Dispositif de pivotement d'une roue directrice (1) de véhicule automobile, ladite roue comportant un support de roue (4) monté pivotant autour d'un axe de pivotement (5) sensiblement vertical et proche du plan médian de la roue, grâce à des moyens d'articulation (10, 14) dont l'un au moins est porté par un bras ou triangle oscillant (6, 7) relié au châssis du véhicule par l'intermédiaire d'un axe d'oscillation sensiblement horizontal (9, 12) caractérisé par le fait qu'il comporte:

Un actionneur rotatif (14) ayant pour axe de rotation l'axe de pivotement (5) de la roue (1), constituant un moyen d'articulation du support de roue (4) porté par le bras oscillant (7) et comprenant un rotor (20) solidaire du support de roue (4) et un stator (21) relié au bras oscillant (7) par l'intermédiaire de moyens d'articulation (15, 16) ayant un axe parallèle à l'axe d'oscillation (12)

et des moyens de commande (37) de l'actionneur (14) en fonction de paramètres de conduite du véhicule, lesdits moyens permettant d'assurer une commande indépendante et sans transmission mécanique.

2. Dispositif suivant la revendication 1, dans le cas où la roue (1) comporte un bras de suspension supérieur (7) et un bras ou triangle de suspension inférieur (6) caractérisé par le fait que l'actionneur (14) est porté par le bras supérieur (7).

3. Dispositif suivant la revendication 2, caractérisé par le fait que le bras de suspension supérieur (7) comporte deux parties montées articulées entre elles par l'intermédiaire d'un axe (19) parallèle à l'axe d'oscillation, l'une de ces parties constituant le bras proprement dit (7) étant articulée sur le châssis du véhicule et comportant un palier d'articulation (15) du stator de l'actionneur (14) et l'autre partie (18) articulée sur le bras proprement dit (7) comportant un second élément d'articulation (16) du stator (21) de l'actionneur (14) sur le bras (7).

4. Dispositif suivant la revendication 1, dans le cas d'une roue (1) comportant un bras ou triangle de suspension supérieur (7) et un bras ou triangle de suspension inférieur (6) caractérisé par le fait que l'actionneur (14) est porté par le bras de suspension inférieur (6).

5. Dispositif suivant la revendication 1, dans le cas d'une suspension de type MacPherson comportant un palier de guidage d'un amortisseur de roue et un bras de suspension inférieur, caractérisé par le fait que l'actionneur (14) est porté par le bras de suspension inférieur.

6. Dispositif suivant l'une quelconque des revendications 1 à 5, caractérisé par le fait que l'actionneur (14) est de type hydraulique, le rotor (20) étant disposé à l'intérieur du stator (21) et délimitant avec celui-ci, par l'intermédiaire de pales radiales (32) solidaires du rotor (20) et d'ailettes radiales (33) solidaires de la surface intérieure du stator (21), un ensemble de chambres (34) disposées successivement à la périphrie du rotor, une chambre sur deux étant reliée à une première conduite hydraulique d'alimentation ou d'évacuation (35) et les autres chambres, à une seconde conduite hydraulique d'alimentation et d'évacuation (36).

7. Dispositif suivant la revendication 6, caractérisé par le fait que les moyens de commande de l'actionneur (14) sont constitués par un boîtier de commande et de distribution (37) comportant des circuits électroniques de calcul et de commande et des moyens de distribution hydrauliques tels que des servovalves, ce boîtier étant relié par des conduites hydrauliques (35, 36) à l'actionneur hydraulique (14).

8. Dispositif suivant l'une quelconque des revendications 1 à 6. caractérisé par le fait que le rotor (20) de l'actionneur (14) comporte un alésage central présentant des cannelures destinées à s'engager sur une partie cannelée correspondante d'un arbre (22, 42) vertical et solidaire de la partie supérieure du support de roue (4, 4').

9. Dispositif suivant la revendication 8, caractérisé par le fait que l'arbre (22) est constitué par l'extrémité supérieure du support de roue (4).

10. Dispositif suivant la revendication 8, caractérisé par le fait que l'arbre (42) est constitué par une pièce amovible rapportée, fixée à l'extrémité supérieure du support de roue (4').

11. Dispositif suivant l'une quelconque des revendications 1 à 10, caractérisé par le fait qu'un capteur d'angle (27, 29, 30) est monté sur le rotor (20) de l'actionneur (14), pour la détermination de l'angle de pivotement de la roue (1).

**Patentansprüche**

1. Schwenkvorrichtung für ein gelenktes Rad (1) eines Kraftfahrzeugs, wobei das Rad einen Radträger (4) aufweist, welcher um eine im wesentlichen vertikale und in der Nähe der Mittelebene des Rades liegende Schwenkachse (5) dank Gelenkmitteln (10, 14) schwenkbar ist, von denen wenigstens eines von einem mit dem Fahrzeugrahmen über eine im wesentlichen horizontale Schwenkachse (9, 12) verbundenen Lenkarm bzw. -dreieck (6, 7) getragen wird, dadurch gekennzeichnet, daß sie

eine Drehbetätigungsvorrichtung (14), welche als Drehachse die Schwenkachse (5) des Rades (1) hat, ein Mittel zur Schwenkung des vom Lenkarm (7) getragenen Radträgers bildet und einen mit dem Radträger (4) fest verbundenen Rotor (20) und einen Stator (21), welcher mit dem Lenkarm (7) über Schwenkmittel (15, 16) mit zur Schwenkachse (12) paralleler Achse verbunden ist, umfaßt,

und Steuermittel (37) für die Betätigungsvorrichtung (14) zur Steuerung in Abhängigkeit von Fahrzeuglenkparametern aufweist, wobei diese Mittel eine unabhängige Steuerung und Steuerung ohne mechanische Übertragung gestatten.

2. Vorrichtung nach Anspruch 1, wobei das Rad (1) einen oberen Aufhängungsarm (7) und einen unteren Aufhängungsarm bzw. ein unteres Aufhängungsdreieck (6) aufweist, dadurch gekennzeichnet, daß die Betätigungsvorrichtung (14) auf dem oberen Aufhängungsarm (7) sitzt.

3. Vorrichtung nach Anspruch 2, dadurch gekennzeichnet, daß der obere Aufhängungsarm (7) zwei Teile aufweist, die aneinander über eine zur Schwenkachse parallele Achse (19) angelenkt wird, wobei der eine dieser Teile den eigentlichen Arm (7) bildet, der am Fahrzeugrahmen angelenkt ist und ein Schwenklager (15) für den Stator der Betätigungsvorrichtung (14) umfaßt, und der andere am eigentlichen Arm (7) angelenkte Teil (18) ein zweites Schwenkelement (16) zum Schwenken des Stators (21) der Betätigungsvorrichtung (14) auf dem Arm (7) aufweist.

4. Vorrichtung nach Anspruch 1, wobei das Rad (1) einen oberen Aufhängungsarm bzw. ein oberes Aufhängungsdreieck (7) und einen unteren Aufhängungsarm bzw, ein unteres Aufhängungsdreieck (6) umfaßt, dadurch gekennzeichnet, daß die Betätigungsvorrichtung (14) auf dem unteren Aufhängungsarm (6) sitzt.

5. Vorrichtung nach Anspruch 1, wobei eine MacPherson-Aufhängung mit einem Führungslager für einen Radstoßdämpfer und einem unteren Aufhängungsarm vorgesehen ist, dadurch gekennzeichnet, daß die Betätigungsvorrichtung (14) auf dem unteren Aufhängungsarm sitzt.

6. Vorrichtung nach irgendeinem der Ansprüche 1 bis 5, dadurch gekennzeichnet, daß die Betätigungsvorrichtung (14) von hydraulischer Art ist, wobei der Rotor (20) im Inneren des Stators (21) angeordnet ist und mit diesem über mit dem Rotor (20) fest verbundene radiale Platten (32) und mit der Innenfläche des Stators (21) fest verbundene radiale Flügel (33) einen Satz von Kammern (34) bestimmt, die aufeinanderfolgend am Umfang des Rotors angeordnet sind, wobei jede zweite Kammer mit einer ersten hydraulischen Speise- oder Abzugsleitung (35) verbunden ist und die anderen Kammern mit einer zweiten hydraulischen Speise- und Abzugsleitung (36) verbunden sind.

7. Vorrichtung nach Anspruch 6, dadurch gekennzeichnet, daß die Steuermittel für die Betätigungsvorrichtung (14) durch ein Steuer- und Verteilergehäuse (37) gebildet sind, welches elektronische Rechen- und Steuerkreise sowie hydraulische Verteilmittel, wie Servoventile, enthält, wobei das Gehäuse über Hydraulikleitungen (35, 36) mit der hydraulischen Betätigungsvorrichtung (14) verbunden ist.

8. Vorrichtung nach irgendeinem der Ansprüche 1 bis 6, dadurch gekennzeichnet, daß der Rotor (20) der Betätigungsvorrichtung (14) eine zentrale Bohrung aufweist, welche Kannelierungen für ein Einlegen in einen entsprechenden kannelierten Teil einer vertikalen und mit dem oberen Teil des Radträgers (4, 4') fest verbundenen Welle (22, 42) aufweist.

9. Vorrichtung nach Anspruch 8, dadurch gekennzeichnet, daß die Welle (22) durch das obere Ende des Radträgers (4) gebildet ist.

10. Vorrichtung nach Anspruch 8, dadurch gekennzeichnet, daß die Welle (42) durch ein lösbar aufgesetztes, am oberen Ende des Radträgers (4') befestigtes Teil gebildet ist.

11. Vorrichtung nach irgendeinem der Ansprüche 1 bis 10, dadurch gekennzeichnet, daß zur Ermittlung des Schwenkwinkels des Rades (1) ein Winkelgeber (27, 29, 30) am Rotor (20) der Betätigungsvorrichtung (14) angebracht ist.

## Claims

1. Device for turning a steering wheel (1) of a motor vehicle, said wheel comprising a wheel support (4) mounted to turn about a turning axis (5) which is substantially vertical and close to the median plane of the wheel, by virtue of articulation means (10, 14) whereof at least one is supported by an oscillating arm or triangle (6, 7) connected to the chassis of the vehicle through the intermediary of a substantially horizontal oscillation axis (9, 12), characterised by the fact that it comprises:

a rotary actuator (14) having for its axis of rotation the turning axis (5) of the wheel (1), constituting articulation means for the wheel support (4) supported by the oscillating arm (7) and comprising a rotor (20) integral with the wheel support (4) and a stator (21) connected to the oscillating arm (7) through the intermediary of articulation means (15, 16) having an axis parallel to the oscillation axis (12)

and means (37) for controlling the actuator (14) depending on the driving parameters of the vehicle, said means making it possible to ensure an independent control and without mechanical transmission.

2. Device according to Claim 1, in the case where the wheel (1) comprises an upper suspension arm (7) and a lower suspension arm or triangle (6), characterised by the fact that the actuator (14) is supported by the upper arm (7).

3. Device according to Claim 2, characterised by the fact that the upper suspension arm (7) comprises two parts mounted so that they are articulated with respect to each other through the intermediary of a spindle (19) parallel to the axis of oscillation, one of these parts constituting the arm proper (7) being articulated on the chassis of the vehicle and comprising an articulation bearing (15) for the stator of the actuator (14) and the other part (18) articulated on the arm proper (7) comprising a second member (16) for the articulation of the stator (21) of the actuator (14) on the arm (7).

4. Device according to Claim 1, in the case of a wheel (1) comprising an upper suspension arm or triangle (7) and a lower suspension arm or triangle (6), characterised by the fact that the actuator (14) is carried by the lower suspension arm (6).

5. Device according to Claim 1, in the case of a suspension of the MacPherson type comprising a bearing for guiding a wheel shock-absorber and a lower suspension arm, characterised by the fact that the actuator (14) is carried by the lower suspension arm.

6. Device according to one of Claims 1 to 5, characterised by the fact that the actuator (14) is of the hydraulic type, the rotor (20) being disposed inside the stator (21) and defining with the latter, through the intermediary of radial vanes (32) integral with the rotor (20) and radial blades (33) integral with the inner surface of the stator (21), an arrangement of chambers (34) disposed in succession on the periphery of the rotor, every other chamber being connected to a first hydraulic pipe (35) for supply or discharge and the other chambers being connected to a second hydraulic pipe (36) for supply and discharge.

7. Device according to Claim 6, characterised by the fact that the means for controlling the actuator (14) are constituted by a control and distribution box (37) comprising electronic calculation and control circuits and hydraulic distribution means such as servo-valves, this box being connected by hydraulic pipes (35, 36) to the hydraulic actuator (14).

8. Device according to one of Claims 1 to 6, characterised by the fact that the rotor (20) of the actuator (14) comprises a central bore comprising splines intended to engage on a corresponding splined part of a vertical shaft (22, 42) integral with the upper part of the wheel support (4, 4').

9. Device according to Claim 8, characterised by the fact that the shaft (22) is constituted by the upper end of the wheel support (4).

10. Device according to Claim 8, characterised by the fact that the shaft (42) is constituted by an attached removable part, fixed to the upper end of the wheel support (4').

11. Device according to one of Claims 1 to 10, characterised by the fact that an angle sensor (27, 29, 30) is mounted on the rotor (20) of the actuator (14), for determining the turning angle of the wheel (1).

FIG.1

FIG.2

FIG.5

FIG.3

FIG.4